# EUROPÄISCHE PATENTANMELDUNG

(11) **EP 0 538 570 A1**
(43) Veröffentlichungstag der Anmeldung: **28.04.1993**
(21) Anmeldenummer: 92113545.5
(22) Anmeldetag: 08.08.1992
(51) Int. Cl.: B65B 47/04

(54) **Vorrichtung zum Herstellen einer Verpackung**

(30) Priorität: 25.10.1991 DE 9113290 U
(71) Anmelder: Krämer + Grebe GmbH & Co. KG Maschinenfabrik, D-35216 Biedenkopf-Wallau (DE)
(72) Erfinder: Schneider, Hans-Jürgen, W-5928 Bad Laasphe 13 (DE); Meyer, Klaus, W-3565 Breidenbach-Wiesenbach (DE); Bretz, Bruno, W-3565 Breidenbach-Wiesenbach (DE)
(74) Vertreter: Missling, Arne, Dipl.-Ing.

(57) **Zusammenfassung**

Um Verpackungen auch dann rationell herstellen zu können, wenn die Verpackung in einem zu deren Herstellung erforderlichen Tiefziehwerkzeug zu Unterschneidungen führt, ist eine einfache und praktische Lösung für die Bewegung der Unterteile in den jeweils erforderlichen Arbeitsstationen zweckmäßig. Diese Unterteile sind im allgemeinen senkrecht verfahrbar, um sauber entformen zu können. Eine schräge Entformung bzw. Entfernung des Unterteils wird entsprechend der Erfindung dadurch erreicht, daß sich zwischen dem Unterteil (4) des Werkzeuges und der Hubeinrichtung (H) zu dessen senkrechter Bewegung eine Schlittenführung befindet, die auch eine leicht gängige waagerechte Bewegung ermöglicht. Ein an diesem befestigter Kulissenbolzen ist Teil einer Kulissenführung, die die gewünschte Zwangsführung, beispielsweise zum schrägen Entformen, steuert. Sie kann bei Tiefziehwerkzeugen. Siegelwerkzeugen und ähnlichem angewendet werden.

## Beschreibung

Vorrichtung zum Herstellen einer Verpackung, vor allem im Rahmen einer Verpackungslinie, wobei in einer Tiefziehstation eine erste, zugeführte Folie in ein tiefgezogenes Aufnahmeteil zum Einlegen des Packungsgutes und in einer Siegelstation dessen Verschluß mit einem die Stirnseite der Verpackung bildenden vorzugsweise ebenen Verschlußteil aus einer zweiten Folie erfolgt, mit einem Tiefziehwerkzeug, in dessen beim Tiefziehen senkrecht nach oben und beim Entformen senkrecht nach unten bewegten Unterteil eine darin ortsfeste Matrize angeordnet ist.

Insbesondere bei Verpackungen, deren Höhe ihre Tiefe überschreitet, werden Aufstellflächen benötigt, um die Verpackung jeweils stabil aufstellen zu können. Die Aufstellfläche einschließlich einer daran vorgesehenen Stelleiste kann dabei so gestaltet sein, daß sie, obgleich etwa im rechten Winkel zum Verschlußteil verlaufend, doch insgesamt so ausgeführt ist, daß das Verschlußteil bei aufgestellter Verpackung etwa senkrecht steht; dies ist dann der Fall, wenn die Stelle des tiefsten Unterschnittes und die dazu parallele, andere Kante der Aufstellfläche in einer Ebene liegen, die senkrecht auf der Ebene des Verschlußteils steht.

Eine Verpackung dieser Art bereitet jedoch Schwierigkeiten bei ihrer Entnahme aus den Unterteilen der Tiefziehstation und der Siegelstation, weil diese nur senkrecht nach unten bewegt werden, wenn das jeweils zugehörige Oberteil ortsfest ist. Bei einer unterschnittenen Aufstellfläche der Verpackung, die hierbei senkrecht orientiert ist, kann das Aufnahmeteil deshalb nicht entformt werden. Eine - umständliche - Verwendung von Seitenschiebern ist bei einer Hochleistungsanlage nicht möglich.

Die Erfindung hat sich deshalb die Aufgabe gestellt, eine Vorrichtung der eingangs näher beschriebenen Art so zu gestalten, daß unter Wahrung der Vorteile einer unterschnittenen Aufstellfläche die Herstellung einer solchen Verpackung, vor allem in einer Verpackungslinie, so durchgeführt werden kann, daß die Verpackung sauber entformbar ist. Dabei soll das jeweilige Oberteil nach wie vor ortsfest sein.

Erfindungsgemäß wird die Aufgabe dadurch gelöst, daß eine zur Transportrichtung senkrecht stehende Seitenfläche der Matrize hinterschnitten ist, daß die dieser Seitenfläche gegenüberliegende Seitenfläche so geneigt ist, daß ein Entformen von konturengleicher Patrize und Matrize in der Richtung dieser geneigten Seitenfläche möglich ist, und daß an dem Unterteil des Tiefziehwerkzeuges oder eines anderen Werkzeuges, beispielsweise eines Siegelwerkzeuges, eine Kulissenführung vorgesehen ist, die das bei feststehendem Oberteil des gleichen Werkzeuges einschließlich der zugehörigen Patrize während des Tiefziehens bzw. nach beendetem Arbeitsvorgang nach unten ausfahrende Unterteil parallel zu der geneigten Seitenfläche zwangsweise führt.

In einfacher Weise ist das Unterteil dabei in der Transportrichtung der Verpackung horizontal beweglich; das kann so erfolgen, daß das Unterteil auf einem Schlitten befestigt ist, der in einer Schlittenführung längsbeweglich ist. Die Schlittenführung ihrerseits ist auf einer Hubeinrichtung starr befestigt, die selbst nur senkrecht bewegbar ist. Auf diese Weise genügt es, wenn die Hubeinrichtung mittels mindestens einem Kniehebel oder dergleichen Antriebseinrichtung in einer einzigen, senkrecht zur Transportrichtung der Verpackung orientierten Richtung antreibbar ist. Damit ist es möglich, den Antrieb des Unterteiles unverändert zu lassen, gleichgültig, ob die Verpackung eine unterschnittene oder eine nicht unterschnittene Aufstellfläche besitzt. Im letzteren Falle kann die Schlittenführung selbstverständlich entfallen, das Unterteil ist dann auf der Hubeinrichtung direkt befestigt.

Es ist vorteilhaft, wenn die Hubeinrichtung aus zwei Hubschienen besteht, auf denen jeweils eine Führungsschiene der Schlittenführung staubefestigt ist, während andererseits an der Unterseite des Unterteiles zwei den Schlitten bildende Gleitschienen starr befestigt sind, die auf den Führungsschienen aufliegen. Zum Zwecke der seitlichen Führung ist es ganz besonders vorteilhaft, wenn die Gleitschienen und die Führungsschienen eine Schwalbenschwanzführung oder dergleichen bilden. Auf diese Art ist eine leicht gängige Verschiebung des Unterteils in der Transportrichtung der Verpackung gewährleistet. Sie wird weiter verbessert, wenn zwischen dem Schlitten und der Schlittenfuhrung Wälzlager angeordnet sind.

Eine Zwangsführung der Unterteile erfolgt in einfacher Weise dadurch, daß mindestens an einer Seitenwange des Unterteiles ein Kulissenbolzen befestigt ist, der in einer zugehörigen ortsfesten, beispielsweise an dem Maschinengestell angebrachten, in eine Platte eingearbeiteten Kulissenbahn geführt ist und zusammen mit dieser die Kulissenführung bildet. Um ein Verkanten des Schlittens zu vermeiden, ist es selbstverständlich möglich, je eine Kulissenführung zu beiden Seiten der Seitenwangen des Unterteiles anzuordnen.

Weitere Vorteile und die näheren Einzelheiten der Erfindung werden nachstehend anhand der Zeichnung an einem Ausführungsbeispiel näher erläutert. Es zeigen
- Fig. 1: eine Verpackungslinie in der Übersicht,
- Fig. 2: die teilweise geschnittene Seitenansicht einer Tiefziehstation T mit geschlossenem Tiefziehwerkzeug,
- Fig. 3: desgleichen, aber mit entferntem Unterteil.
- Fig. 4: die teilweise geschnittene Seitenansicht einer Siegelstation S mit geschlossenem Siegelwerkzeug,
- Fig. 5: eine Vorderansicht zu Fig. 4, durchweg geschnitten und in der linken Teilfigur mit geschlossenem, in der rechten Teilfigur mit geöffnetem Siegelwerkzeug,
- Fig. 6: eine Schneidstation C im Schnitt, einschließlich des zugehörigen Austragebandes A.
- Fig. 7: eine etwas anders gestaltete Schneidstation C' und
- Fig. 8: eine Seitenansicht zu Fig. 7.

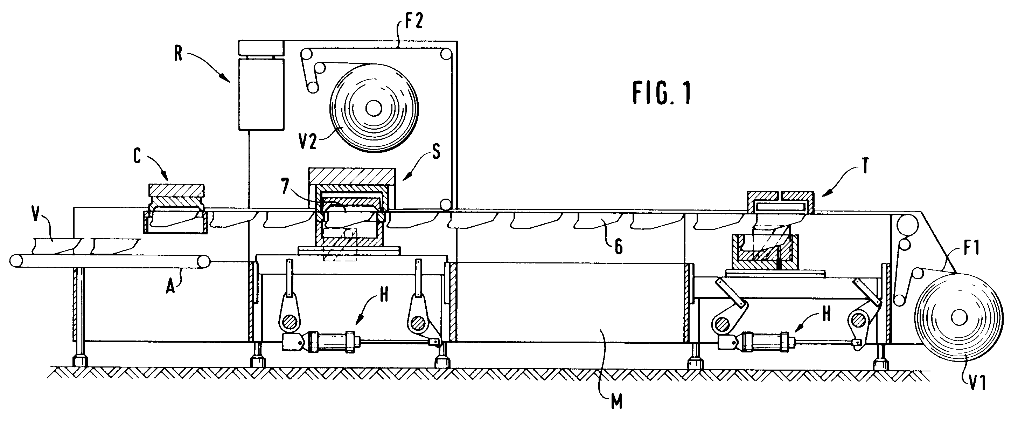

In der Fig. 1 der Zeichnung ist eine Verpackungslinie schematisch dargestellt, auf der Verpackungen hergestellt werden, für die Arbeitsstationen nach der Erfindung geeignet sind. An einem Maschinengestell M befindet sich (in Fig. 1 rechts) eine Vorratsrolle V1 für eine Unterfolie F1, die - beispielsweise mittels Führungsketten - zunächst in eine Tiefziehstation T transportiert wird, wo in die Unterfolie F1 Aufnahmeteile 6 eingeformt werden. Von einer Vorratsrolle V2 wird eine Oberfolie F2 abgezogen, aus der in einer Siegelstation S Verschlußteile 7 entnommen und in einer Schneidstation C zusammen mit der gesamten Verpackung V separiert werden. Die fertigen Verpackungen gelangen schließlich auf ein Austrageband A. In Fig. 1 ist ferner zu erkennen, daß (pneumatisch betätigbare) Hubeinrichtungen H vorgesehen sind, die zum Entformen bzw. Entnehmen der bearbeiteten Teile dienen. Eine Steuereinrichtung R dient zur Regelung des Verpackungsprozesses.

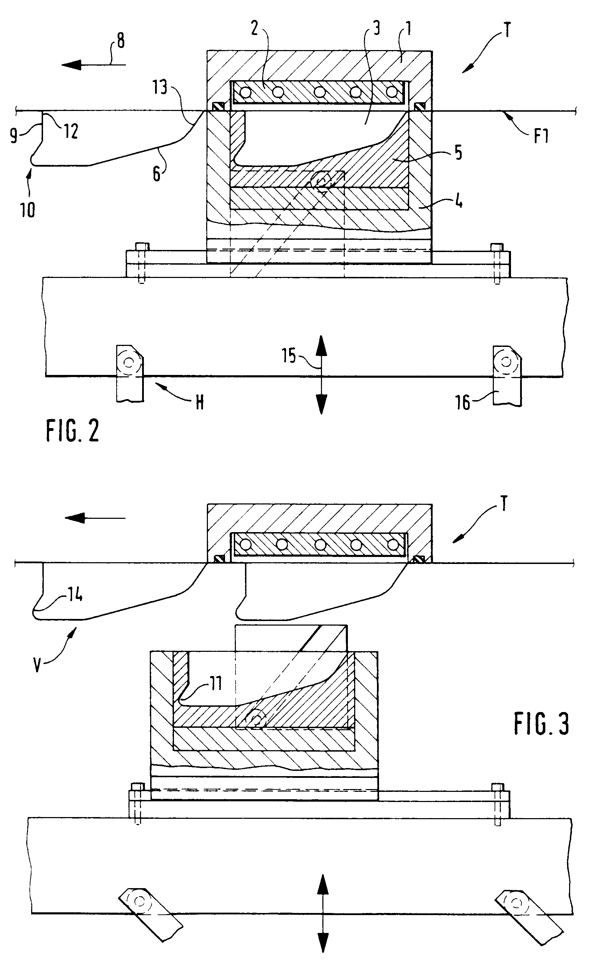

Die Tiefziehstation T der Figuren 2 und 3 besteht zunächst aus einem Oberteil 1, das eine Heizvorrichtung 2 enthält und mit einer Patrize 3 versehen ist. Ein dazu gehöriges Unterteil 4 enthält eine Matrize 5; die Patrize 3 und die Matrize 5 ergeben das Tiefziehwerkzeug 3; 5. Die Unterfolie F1 wird innerhalb der Tiefziehstation T in ein Aufnahmeteil 6 umgeformt. Das Aufnahmeteil 6 wird (Fig. 3) in einer Siegelstation S mit einem Verschlußteil 7 verschlossen, das aus der Oberfolie F2 gebildet wird. Im allgemeinen haben die beiden Folien F1 und F2 für das Aufnahmeteil 6 und für das Verschlußteil 7 unterschiedliche Dicken. Ein Richtungspfeil 8 veranschaulicht die Transportrichtung der Verpackungslinie. Eine Aufstellfläche 9 des Aufnahmeteils 6 besitzt eine Stelleiste 10, die etwas gegenüber der Aufstellfläche 9 erhaben ist und so zu einem Unterschnitt 11 in der Matrize 5 führt (Fig. 3). Die Aufstellfläche 9 verläuft im Ausführungsbeispiel senkrecht zur Transportrichtung 8; es ist jedoch auch möglich, daß sie soweit geringfügig (in der Zeichnung gegen den Uhrzeigersinn) gedreht ist, daß die tatsächliche, nur von der Stelleiste 10 und der zu dieser parallelen Kante 12 aufgespannte tatsächliche Aufstellfläche 9' senkrecht auf der Transportrichtung 8 steht. Auch in diesem Falle verbleibt in dem Tiefziehwerkzeug 3; 5 ein Unterschnitt. Eine Deckfläche 13 bildet die der Aufstellfläche gegenüberliegende Seite der Verpackung V. Sie verläuft genau parallel zu einer Übergangsfläche 14, welche die Stelleiste 10 mit der übrigen Aufstellfläche 9 verbindet. Diese Übergangsfläche 14 trifft unter einem stumpfen Winkel auf die eigentliche Aufstellfläche 9.

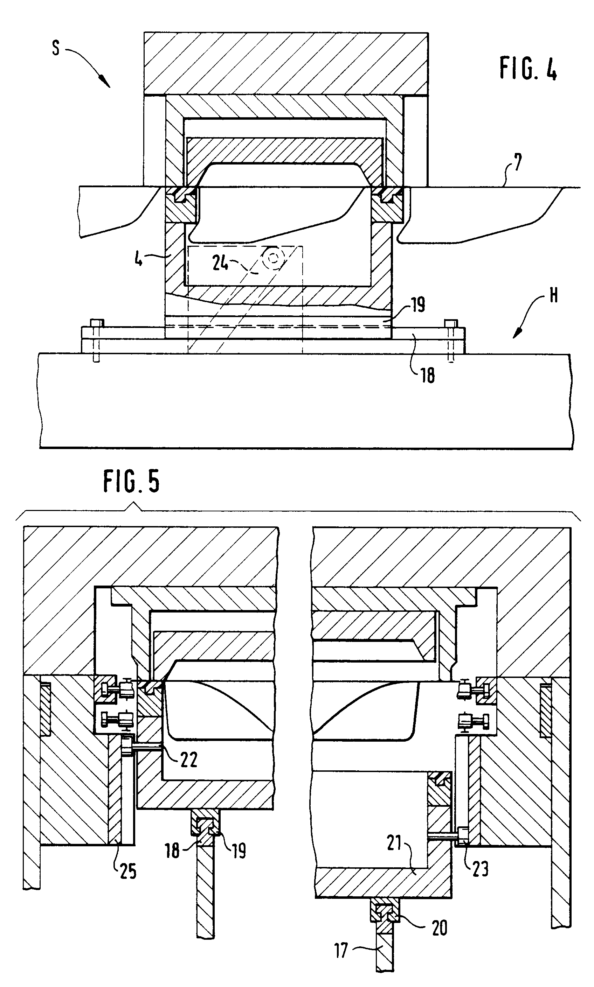

Die Hubeinrichtung H sorgt dafür, daS das Unterteil 4 senkrecht bewegt werden kann; diese Arbeitsrichtung wird durch einen Richtungspfeil 15 veranschaulicht. Dabei wird in einfacher Weise die Hubeinrichtung H mit Kniehebeln 16 bewegt. Zwischen das Unterteil 4 und die Hubeinrichtung H, die entsprechend Fig. 5 aus zwei Hubschienen 17 besteht, wird nun noch ein Schlitten einschließlich Schlittenführung geschaltet, wie das insbesondere in den Fig. 4 und 5 leicht zu erkennen ist. Zu diesem Zweck sind auf den Hubschienen 17 Führungsschienen 18 angebracht, welche die Schlittenführung bilden. Dagegen besteht der Schlitten aus zwei Gleitschienen 19, welche die Führungsschienen 18 überfangen, beispielsweise mit diesen zusammen eine Schwalbenschwanzführung 20 bilden. In der Zeichnung ist dabei auf eine Gleitlagerung abgehoben; es versteht sich, daß stattdessen auch Wälzlager vorgesehen sein können, so daß die Beweglichkeit des Schlittens weiter verbessert ist.

An den Seitenwangen 21 der Unterteile 4 ist jeweils ein Kulissenbolzen 22 starr befestigt, dessen freies Ende 23, das zweckmäßigerweise von einem Wälzlager gebildet wird, in einer schrägen Kulissenbahn 24 geführt ist, die in einer Platte 25 eingearbeitet ist, welche ortsfest am Maschinengestell befestigt ist. Die so gebildete Kulissenführung 23; 24 verläuft genau parallel zu der Übergangsfläche 14 und der Deckfläche 13.

Es ist ohne weiteres zu erkennen, daß unabhängig von der jeweiligen Arbeitsstation gleiche Kulissenführungen 23; 25, Gleitschienen 19 usw. vorgesehen sein können.

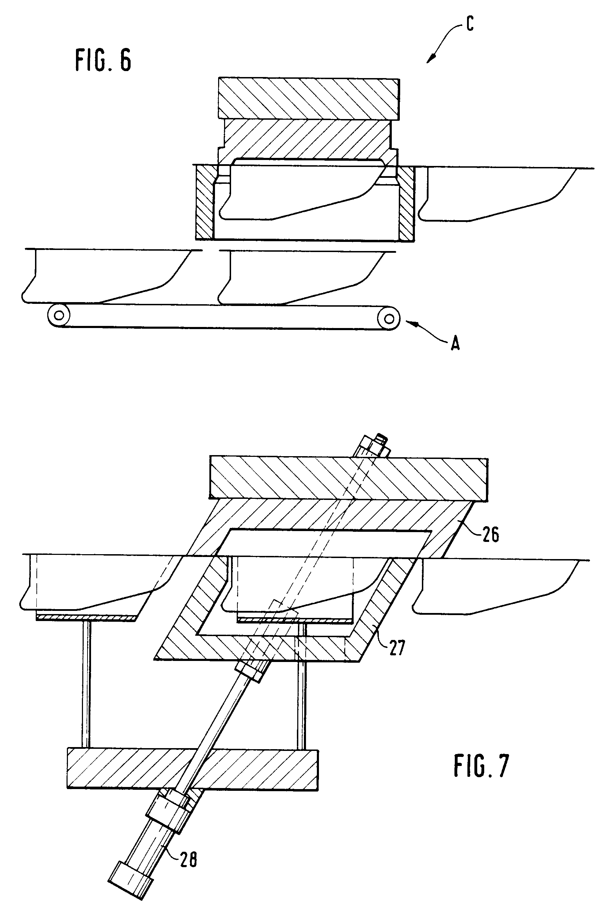

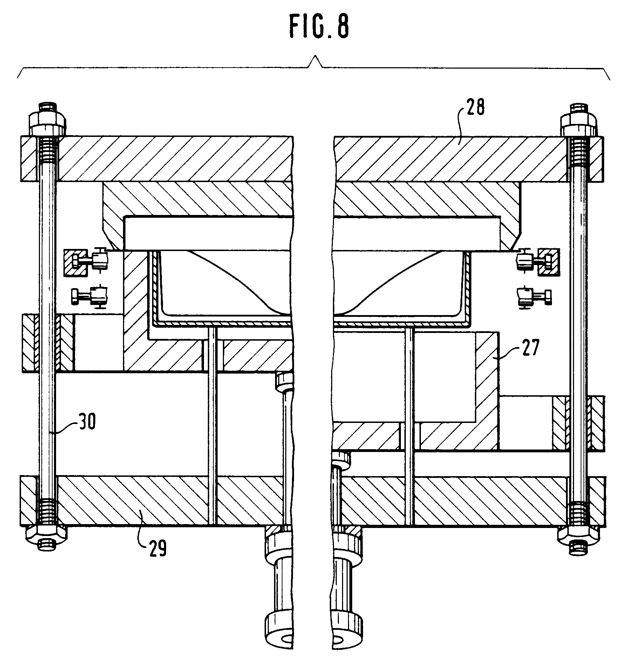

Eine Schneidstation C' entsprechend Fig. 7 und 8 zeigt, daß die Verpackung auch in einem einzigen Stanzschnitt aus den Folien F1 und F2 separiert werden kann. Die beiden Schnittstempel 26 und 27 sind entsprechend geneigt (parallel zu der Übergangsfläche 14); der Schnittstempel 26 gibt in seiner ausgefahrenen Lage (Fig. 8, rechte Seite) den Verpackungsweg frei. Eine Betätigung des beweglichen Schnittstempels 26 gegen den ortsfesten 27 erfolgt mit einem pneumatischen Hubzylinder 28, der in einer Traverse 29 gehalten ist, die ihrerseits mittels Ankerschrauben 30 am Maschinengestell M ortsfest ist.

## Patentansprüche

1. Vorrichtung zum Herstellen einer Verpackung, vor allem im Rahmen einer Verpackungslinie, wobei in einer Tiefziehstation eine erste, zugeführte Folie in ein tiefgezogenes Aufnahmeteil zum Einlegen des Packungsgutes und in einer Siegelstation dessen Verschluß mit einem die Stirnseite der Verpackung bildenden vorzugsweise ebenen Verschlußteil aus einer zweiten Folie erfolgt, mit einem Tiefziehwerkzeug, in dessen beim Tiefziehen senkrecht nach oben und beim Entformen senkrecht nach unten bewegten Unterteil eine darin ortsfeste Matrize angeordnet ist, dadurch gekennzeichnet, daß eine zur Transportrichtung senkrecht stehende Seitenfläche (9) der Matrize hinterschnitten ist, daß die dieser Seitenfläche (9) gegenüberliegende Seitenfläche (13) so geneigt ist, daß ein Entformen von konturengleicher Patrize und Matrize in der Richtung dieser geneigten Seitenfläche (13) möglich ist, und daß an dem Unterteil (4) des Tiefziehwerkzeuges (1; 4) oder eines anderen Werkzeuges, beispielsweise eines Siegelwerkzeuges, eine Kulissenführung (23; 25) vorgesehen ist, die das bei feststehendem Oberteil (1) des gleichen Werkzeuges einschließlich der zugehörigen Patrize (3) während des Tiefziehens bzw. nach beendetem Arbeitsvorgang nach unten ausfahrende Unterteil (4) parallel zu der geneigten Seitenfläche (13) zwangsweise führt.

2. Vorrichtung nach Anspruch 1, dadurch gekennzeichnet, daß der Unterteil (4) in der Transportrichtung der Verpackung (V) horizontal beweglich ist.

3. Vorrichtung nach Anspruch 1 und 2, dadurch gekennzeichnet, daß das Unterteil (4) auf einem Schlitten befestigt ist, der in einer Schlittenführung längsbeweglich ist.

4. Vorrichtung nach Anspruch 1 bis 3, dadurch gekennzeichnet, daß die Schlittenführung auf einer Hubeinrichtung (H) starr befestigt ist, die nur senkrecht bewegbar ist.

5. Vorrichtung nach Anspruch 1 bis 4, dadurch gekennzeichnet, daß die Hubeinrichtung (H) mittels mindestens einem Kniehebel (16) oder dergleichen Antriebseinrichtung antreibbar ist.

6. Vorrichtung nach Anspruch 1 bis 5, dadurch gekennzeichnet, daß die Hubeinrichtung (H) aus zwei Hubschienen (17) besteht, auf denen jeweils eine Führungsschiene (18) der Schlittenführung befestigt ist.

7. Vorrichtung nach Anspruch 1 bis 6, dadurch gekennzeichnet, daß an der Unterseite des Unterteils (4) zwei den Schlitten bildende Gleitschienen (19) starr befestigt sind, die auf den Führungsschienen (18) aufliegen.

8. Vorrichtung nach Anspruch 1 bis 7, dadurch gekennzeichnet, daß die Gleitschienen (19) und die Führungsschienen (18) eine Schwalbenschwanzführung (20) oder dergl. bilden.

9. Vorrichtung nach Anspruch 1 bis 3, dadurch gekennzeichnet, daß zwischen dem Schlitten und der Schlittenführung Wälzlager angeordnet sind.

10. Vorrichtung nach Anspruch 1, dadurch gekennzeichnet, daß mindestens an einer Seitenwange (21) des Unterteiles (4) ein Kulissenbolzen (22) befestigt ist, der in einer zugehörigen ortsfesten, beispielsweise an dem Maschinengestell angebrachten, in eine Platte (25) eingearbeiteten Kulissenbahn (24) geführt ist und zusammen mit dieser die Kulissenführung (23; 24) bildet.
